# EUROPÄISCHE PATENTSCHRIFT

(11) **EP 1 026 792 B1**
(45) Veröffentlichungstag und Bekanntmachung des Hinweises auf die Patenterteilung: **04.05.2005**
(21) Anmeldenummer: 00101926.4
(22) Anmeldetag: 01.02.2000
(51) Int. Cl.: H01R 13/74, H02G 3/12

(54) **Installationsgerät zur Elektroinstallation**
Installation device for an electrical installation
Dispositif d'installation pour une installation électrique

(30) Priorität: 01.02.1999 DE 29901708 U
(43) Veröffentlichungstag der Anmeldung: 09.08.2000
(73) Patentinhaber: Popp GmbH + Co KG, 95460 Bad Berneck (DE)
(72) Erfinder: Esslinger,Hartmut,Prof.Dr., Los Gatos, CA 95030 (US)
(74) Vertreter: Tergau & Pohl Patentanwälte

(56) Entgegenhaltungen:
- US-A- 5 484 299

## Beschreibung

Die Erfindung bezieht sich auf ein Installationsgerät zur Elektroinstallation, insbesondere auf eine Steckdose oder einen Schalter zur Unterputzmontage, mit einem einen Gerätesockel haltenden Tragrahmen.

Derartige Steckdosen oder Schalter bzw. Taster als elektrische Installationsgeräte weisen üblicherweise einen Gerätesockel oder Grundkörper aus Isolierstoff, beispielsweise aus Keramik oder Kunststoff, und einen diesen haltenden Tragrahmen auf, der z.B. ein gestanztes Blechteil ist. Der Gerätesockel nimmt die Kontaktelemente in Form von Steckbuchsen bei einer Steckdose oder in Form von Schraub- oder Klemmkontakten bei einem Schalter oder Taster auf. Zur Unterputzmontage wird das Installationsgerät in eine Unterputzdose eingeführt und dort mittels am Tragrahmen und/oder am Gerätesockel befestigten Spreizkrallen gehalten.

Bei der Herstellung oder Fertigung derartiger Installationsgeräte werden üblicherweise verschiedene Abstände zwischen dem Gerätesockel und dem Tragrahmen realisiert. Dies ist aufgrund verschiedener Normen oder Anforderungen für unterschiedliche nationale Märkte erforderlich. Dies führt dazu, daß eine entsprechende Vielzahl von mit unterschiedlichen Abständen zwischen dem jeweiligen Tragrahmen und dem jeweiligen Steckdosen- bzw. Schaltergrundkörper oder Gerätesockel ausgeführten Installationsgeräten bereitgestellt oder vorgehalten werden muß. Dies erfordert in unerwünschter Weise einen hohen Fertigungsaufwand und eine aufwendige Lagerhaltung.

Der Erfindung liegt daher die Aufgabe zugrunde, ein Installationsgerät der eingangs genannten Art anzugeben, bei dem unter Vermeidung dieser Nachteile ein hoher Vorfertigungsgrad möglich ist.

Diese Aufgabe wird erfindungsgemäß gelöst durch die Merkmale des Anspruchs 1. Dazu ist die Halteverbindung zwischen dem Gerätesockel und dem Tragrahmen höhenverstellbar ausgebildet.

Mittels dieser Höhenverstellung kann der Abstand des Tragrahmens zum eigentlichen Steckdosen- oder Schalterkörper in Form des Gerätesockels verstellt werden. Dabei kann die Höhenverstellung mehrstufig oder stufenlos sein. Hierzu ist zwischen dem Tragrahmen und dem Gerätesockel ein Rastgesperre ausgebildet, das die Halteverbindung oder Befestigungsvorrichtung zwischen diesen beiden Geräteteilen bildet. Das Rastgesperre kann ein- oder mehrstufig sein, wobei es zur stufenlosen Verstellbarkeit vergleichsweise grob ist. Bei der stufenlosen Verstellung erfolgt in der gewünschten oder eingestellten Stellung zweckmäßigerweise eine Klemmfixierung des Tragrahmens am Gerätesockel mittels einer in diesen eindrehbaren Halteschraube. Vorzugsweise ist das Rastgesperre dreistufig.

In vorteilhafter Ausgestaltung ist am Tragrahmen ein in Richtung auf den Gerätesockel weisender Befestigungsfuß vorgesehen, der eine der Anzahl der gewünschten Raststufen entsprechende Anzahl von Rastausnehmungen aufweist. Diese sind dann mit einem am Gerätesockel angeordneten Rastnocken in Eingriff bringbar. Auch kann prinzipiell der Rastnocken am mit dem Tragrahmen vorzugsweise einstückig verbundenen Befestigungsfuß vorgesehen sein, während dann der Gerätesockel die entsprechenden Rastausnehmungen aufweist. Zweckmäßigerweise sind zwei derartige Befestigungsfüße oder Haltearme an gegenüberliegenden Seiten des Tragrahmens an diesen angeformt, die sich - ausgehend von der durch den Tragrahmen gebildeten Ebene - in Richtung auf den Gerätesockel erstrecken.

Die Befestigungsfüße oder Haltearme liegen vorzugsweise jeweils an derselben Tragrahmenseite, an der auch die üblicherweise vorgesehenen Spreizkrallen zur Halterung des Installationsgerätes in einer Unterputzdose vorgesehen sind. Die Befestigungsfüße sind dabei zweckmäßigerweise an einen kragenförmigen Tragring angeformt. Die Befestigungsfüße sind dabei zur Erhöhung der Stabilität räumlich gestalte, indem diese etwa kreisförmig gebogen und bezogen auf den Gerätesockel konvex ausgeformt sind.

Der Tragring bildet den Innenumfang oder die Innenkontur des mit einer zumindestens annähernd kreisförmigen Durchgangsöffnung versehenen und bezüglich der Außenkontur quadratischen Tragrahmens mit abgerundeten Ecken. Der Tragring wiederum ist durch nach innen, d. h. in Richtung auf den Gerätesockel hin abgebogene Rahmenabschnitte des zweckmäßigerweise aus einem dünnen Stanzblech bestehenden Tragrahmens gebildet.

In einer zweckmäßigen Weiterbildung umfaßt jeder der beiden Befestigungsfüße zwei einander gegenüberliegende, jeweils mindestens eine Rastaufnehmung aufweisende Halteschenkel. Diese schließen in der Halteverbindung mit dem Gerätesockel einen an diesem vorgesehenen Haltezapfen zwischen sich ein. Der Haltezapfen wiederum weist an gegenüberliegenden Klemmseiten jeweils einen Rastnocken auf, der in die jeweilige Rastausnehmung des diesem zugewandten Halteschenkels des Befestigungsfußes eingreift.

Der derart ausgestaltete Tragrahmen ist für die genannten Installationsgeräte identisch und kann daher sowohl für die Steckdose als auch für den Schalter oder Taster in der Verbindung mit dem jeweiligen Gerätesockel verwendet werden. Dadurch wird ein besonders hoher Vorfertigungsgrad bezüglich der an die jeweiligen Normen oder Anforderungen anzupassenden Installationsgeräte erreicht. Die Lagerhaltung ist daher entsprechend gering.

Die Halteverbindung kann auch zur Höhenverstellbarkeit des Tragrahmens gegenüber dem jeweiligen Gerätesockel bei der Vorort-Montage oder Installation genutzt werden, um das jeweilige Installationsgerät an die örtlichen Gegebenheiten hinsichtlich der Putzstärke und der bereits eingesetzten oder einmontierten Unterputzdose angepaßt werden, die üblicherweise je nach Verwendungszweck in unterschiedlichen Tiefen ausgeführt ist. Dabei ist die stufenlose Höhenverstellung besonders zwekmäßig.

Zweckmäßigerweise werden jedoch bereits bei der Fertigung des jeweiligen Installationsgerätes die verschiedenen Abstände zwischen dem Tragrahmen und dem jeweiligen Gerätesockel realisiert. Dazu wird in einem ersten Arbeitsgang der Tragrahmen auf den Gerätesockel, d.h. auf den Schalter- oder Steckdosenkörper, aufgesetzt und vorpositioniert. In einem weiteren Arbeitsgang wird der Tragrahmen in seiner Soll-Raststellung verpreßt. Das Rastgesperre und damit die Halteverbindung zwischen dem Tragrahmen und dem Gerätesockel ist dabei so ausgestaltet, daß eine Änderung der Raststellung manuell praktisch nicht mehr möglich ist, sondern nur unter unsachgemäßer Gewalteinwirkung möglich wäre.

Die in der Halteverbindung wirkende Verzahnung, die vorzugsweise in Form des Rastnockens am Gerätesockel vorgesehen ist, ist zweckmäßigerweise nach Art eines Zahnrichtgesperres ausgestaltet. Dies bedeutet, daß die Rastzähne oder Rastnocken am Gerätesockel derart abgeschrägt sind, daß die Rasten oder Rastausnehmungen am Tragrahmen über diese Rastnocken problemlos hinweggleiten können. Erst nachdem der Tragrahmen seine Sollposition oder seine Soll-Raststellung erreicht hat, werden beide Teile derart miteinander verpreßt, daß die Richtung oder das gerichtete Verhalten dieses Zahn- oder Nockenrichtgesperres gewissermaßen aufgehoben ist.

Nachfolgend werden Ausführungsbeispiele der Erfindung anhand einer Zeichnung näher erläutert. Darin zeigen:
- Fig. 1 und 2: in einer Explosionsdarstellung einen Schalter bzw. eine Steckdoseals Installationsgerät mit höhenverstellbarer Halteverbindung zwischen einem Tragrahmen und einem Gerätesockel,
- Fig. 3: eine vergrößerte und um 90° gedrehte Darstellung des Tragrahmens und des Gerätesockels gemäß Fig. 2, und
- Fig. 4: in Seitenansichten die höhenestellbare Halteverbindung in drei unterschiedlichen Abständen zwischen dem Tragrahmen und dem Gerätesockel.

Einander entsprechende Teile sind in allen Figuren mit den gleichen Bezugszeichen versehen.

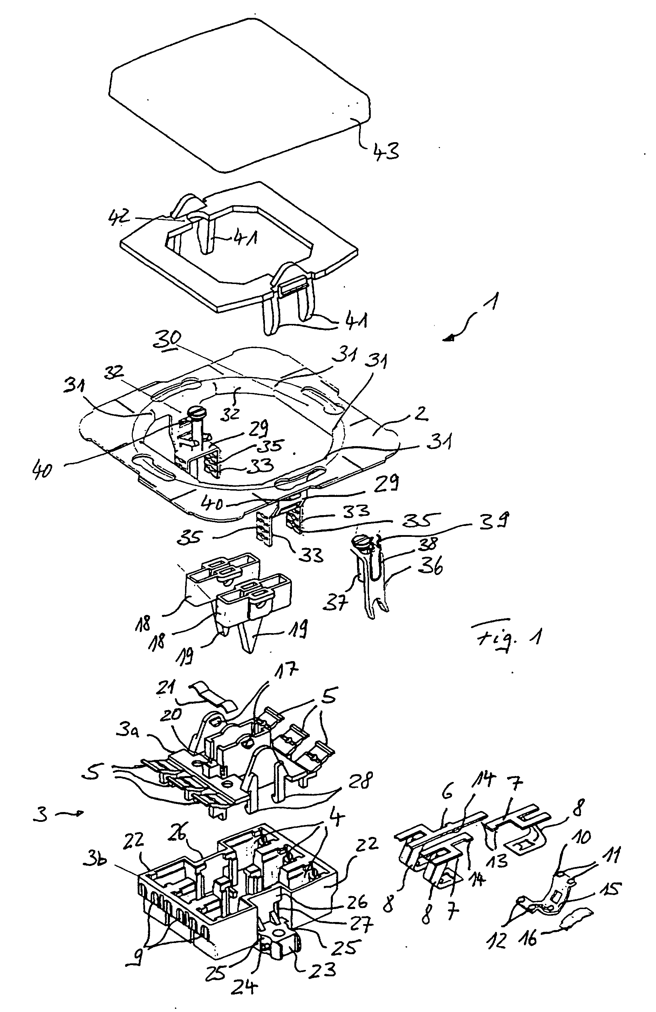

Der in Fig. 1 in seine Bestandteile zerlegt dargestellte Schalter oder Taster 1 als Installationsgerät zur Elektroinstallation umfaßt einen aus einem dünnen Blech ausgestanzten Tragrahmen 2 und einen im zusammengebauten Zustand von diesem gehaltenen Gerätesockel 3. Der Gerätesockel 3 umfaßt im Ausführungsbeispiel ein Sockeloberteil 3a und ein Sockelunterteil 3b mit drei nebeneinanderliegenden Sockel- oder Aufnahmeschächten 4, die im zusammengesetzten Zustand des Gerätesockels 3 von entsprechenden Abdeckarmen 5 des Sockeloberteils 3a abgedeckt oder verschlossen sind. Zuvor werden in die Aufnahmeschächte 4 des Sockelunterteils 3b lange und/oder kurze Kontaktelemente 6 bzw. 7 eingelegt, die vorzugsweise h-förmig ausgebildet sind. Die Kontaktelemente 6,7 wirken mit Klemmfedern 8 zusammen, mittels denen über Einführöffnungen 9 in das Sockelunterteil 3b eingeführte (nicht dargestellte) Leiteradern geklemmt und dabei mit den Kontaktelementen 6,7 kontaktiert werden. Ein zentrales, den Kontaktelementen 6,7 gemeinsames U- oder V-förmiges Kontaktteil 10 weist an dessen abgebogenen Schenkelenden Kontaktpunkte 11,12 auf, die je nach Schalterstellung auf der Unterseite der Kontaktelemente 6,7 angeordnete Kontaktpunkte 13 bzw. 14 kontaktieren.

Dazu ist in die zwischen den Schenkeln des Kontaktteils 10 gebildete Kontaktteilsenke 15 eine die Kontaktteilschenkel überbrückende Kontaktteilfeder 16 eingelegt, die in Richtung auf die Kontaktpunkte 11,12 gewölbt ist. Auf diese Kontaktteilfeder 16 wirkt im zusammengesetzten Zustand des Schalters 1 ein im Sokkeloberteil 3a an Halte- oder Drehlagernocken 17 schwenkbeweglich gehaltener Schwinger 18 mit dessen keilförmigem Schwingerfußes 19.

Bei Ausführung des Schalters 1 als Taster ist an einem Joch 20 des Sockeloberteils 3a eine Tasterfeder 21 zentral gehalten, die den Schwinger 18 und einen diesem benachbarten weiteren, gleichartigen Schwinger 18 nach Betätigung des Tasters infolge der Federkraft der Tasterfeder 21 in die Ausgang- oder Normalposition zurückführt.

Das Sockelunterteil 3b weist an dessen Längsseiten 22 angeformte Haltezapfen auf, von denen lediglich ein Haltezapfen 23 sichtbar ist. An den Haltezapfen 23 sind seitlich Rastnocken angeformt, die an gegenüberliegenden Klemmseiten 25 des Haltezapfens 23 vorgesehen sind, wobei wiederum lediglich ein Rastnokken 24 sichtbar ist. Im Bereich dieser Haltezapfen 23 ist in die entsprechenden Sockellängsseiten 22 eine Ausnehmung 26 mit zwei zueinander beabstandeten Rastausnehmungen 27 vorgesehen, in die beim Zusammenfügen des Sockelunterteils 3b und des Sockeloberteils 3a an diesem angeformte Rasthaken 28 formschlüssig eingreifen.

Die Haltezapfen 23 mit den daran angeformten Rastnocken 24 dienen zur höhenverstellbaren Halterung des Gerätesockels 3 am Tragrahmen 2. Dazu weist dieser mit den Haltezapfen 23 fluchtende Befestigungsfüße 29 auf, die an einen die Innenkontur des Tragrahmens 2 bildenden Tragring 30 angeformt sind und sich dort diametral gegenüberliegen. Der Tragring 30 ist durch Umbiegen von durch Schlitze oder radiale Einschnitte 31 in der Innenkontur des Tragrahmens 2 gebildete Rahmen- oder Tragringlippen 32 realisiert, die in Richtung auf den Gerätesockel 3 abgebogen sind. Die Befestigungsfüße 29 sind dabei an sich gegenüberliegenden Tragringlippen 32 angeformt.

Jeder Befestigungsfuß 29 weist zwei einander gegenüberliegende Halteschenkel 33 auf, die quer zur vom Tragrahmen 2 aufgespannten Ebene verlaufen und sich in Richtung auf den Gerätesockel 3 erstrecken. Im zusammengebauten Zustand des Schalters oder Tasters 1 schließen die Halteschenkel 33 der U-förmigen Befestigungsfüße 29 den jeweiligen Haltezapfen 23 des Gerätesockels 3 zwischen sich ein. Dabei greifen die an der dem jeweiligen Halteschenkel 33 zugewandten Klemmseite 25 des Haltezapfens 23 angeformten Rastnocken 24 in am jeweiligen Halteschenkel 33 vorgesehene Rastausnehmungen 35 ein.

Die Halteverbindung zwischen dem Tragrahmen 2 und dem Gerätesockel 3 ist daher nach Art eines Rastgesperres ausgebildet, dessen Rastelemente einerseits die am Gerätesockel 3 vorgesehenen Rastnocken 24 und andererseits die an den Befestigungsfüßen 29 des Tragrahmens 2 vorgesehenen Rastausnehmungen 35 sind. Prinzipiell ist es jedoch auch möglich, daß die Rastnocken oder -zähne am Tragrahmen 2 und die Rastausnehmungen der Halteverbindung 25,35 am Gerätesockel 3 vorgesehen sind.

An jedem Befestigungsfuß 29 des Tragrahmens 2 ist eine Spreizkralle 36 mittels einer Klemmschraube 37 gehalten. Die Spreizkrallen 36 dienen zur Fixierung des Schalters oder Tasters 1 bei dessen Unterputzmontage in einer (nicht dargestellten) Unterputzdose. An der den Befestigungsfüßen 29 abgewandten Außenseite jeder Spreizkralle 36 ist eine U-förmige Spreizfeder 38 vorgesehen, deren endseitig mehrfach abgekröpften Federschenkelenden 39 hinter einen an den Befestigungsfuß 29 angeformten Haltesteg 40 geschoben ist. Die an der Außenseite der Spreizkralle 36 anliegende Feder 38 hält die Spreizkralle 36 in einer Anlagestellung am Gerätesockel 3, so daß sich die Spreizkralle 3 nicht nach außen bewegen kann, was das Einsetzen des Schalters oder Tasters 1 in die Unterputzdose behindern würde.

Auf den Tragrahmen 2 ist ein mit Fixierdornen 41 versehenes Haltestück oder ein Zwischenrahmen 42 aus Kunststoff aufsetzbar, das bzw. der über die Fixierdorne 41 am Tragring 30 des Tragrahmens 2 im zusammengesetzten Zustand des Schalters 1 geklemmt ist. Auf diesen Zwischen- oder Halterahmen 42 wiederum wird bei der Montage des Schalters dessen ebenfalls aus Kunststoff bestehende Schaltwippe 43 aufgesetzt. Zur Fixierung und Positionierung trägt diese an deren Unterseite mit den Schwingern 18 verklemm- oder verrastbare (nicht dargestellte) Formschlußelemente.

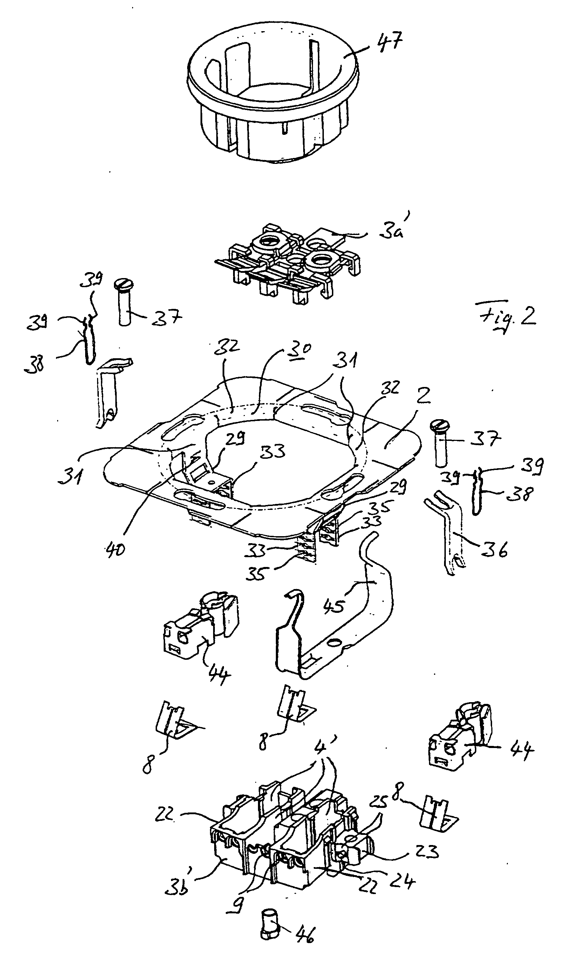

Bei der in Fig. 2 wiederum in deren Einzelteile zerlegt dargestellten Steckdose 1' als Installationsgerät ist der Tragrahmen 2 mit dem in Fig. 1 dargestellten Tragrahmen 2 identisch. Der Tragrahmen 2 sowie die daran befestigten, gleichermaßen aufgebauten Spreizkrallen 36 sind somit sowohl für den Schalter oder Taster 1 als auch für die Steckdose 1' verwendbar. Die Anzahl der für diese Installationsgeräte 1,1' herzustellenden und vorzuhaltenden Bauteile ist dadurch in vorteilhafter Weise besonders gering.

Auch ist der Gerätesockel 3' der Steckdose 1' ähnlich aufgebaut. So weist dieser wiederum an dessen Längsseiten 22' entsprechend ausgebildete Haltezapfen 23 mit daran angeformten Rastnocken 24 auf. Diese bilden mit den an den Befestigungsfüßen 29 des Tragrahmens 2 vorgesehenen schlitzartigen Rastausnehmungen 33 wiederum eine höhenverstellbare Halteverbindung zwischen dem Tragrahmen 2 und dem Gerätesockel 3 nach Art eines Rastgesperres. Der Gerätesockel 3 ist wiederum mit Sockelschächten 4' versehen, in die in Form von Kontaktbuchsen 44 ausgebildete Kontaktelemente der Steckdose 1' eingesetzt werden. Die Kontaktbuchsen 44 wirken wiederum mit Klemmfedern 8 zusammen, die in Verbindung mit den wiederum stirnseitig am Gerätesockel 3 vorgesehenen Einführöffnungen 9 eine Klemmkontaktierung mit den anzuschließenden (nicht dargestellten) Leiteradern ermöglichen. Ein zwischen den die Kontaktbuchsen 44 aufnehmenden Sockelschächten 4' liegende zentrale Sockelschacht 4' nimmt einen bei Steckdosen üblicherweise vorgesehenen Schutzkontaktbügel 45 auf, der mittels eines Niets 46 im Gerätesockel 3 fixiert wird. Dem Schutzkontaktbügel 45 ist wiederum eine entsprechend ausgebildete Klemmfeder 8 zur Klemmkontaktierung des Schutzleiters zugeordnet.

Der Gerätesockel 3 ist wiederum zweiteilig aufgebaut und umfaßt ein Sokkeloberteil 3a' und ein Sockelunterteil 3b', das wiederum das entsprechende Rastelement 23,24 der höhenverstellbaren Halteverbindung 24,33 aufweist. Weiterer Bestandteil der Steckdose 1' ist ein aus Kunststoff bestehender Steckdoseneinsatz 47, der in den Tragrahmen 2 eingesetzt und mittels einer (nicht dargestellten) Schraube am Gerätesockel 3' fixiert wird.

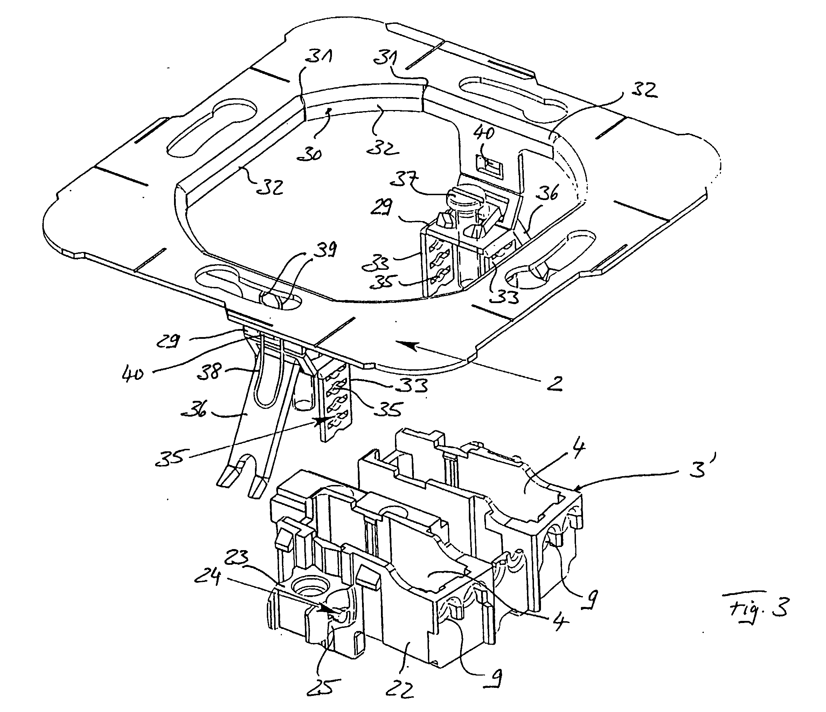

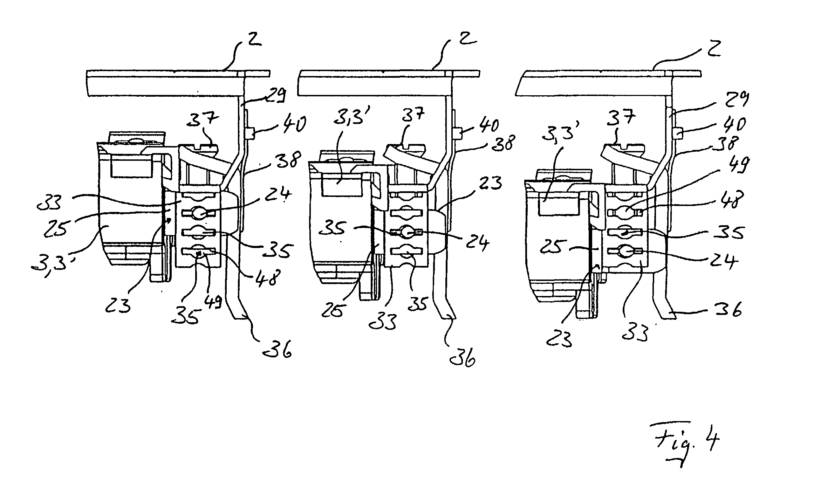

Die Figuren 3 und 4 zeigen die mehrstufig ausgebildeten Halteverbindung zwischen dem Tragrehmen 2 und dem Gerätesockel 1' mit Blick auf die Halteschenkel 33 vor bzw. nach dem zusammenfügen der Rastverbindung. Die Mehrstufigkeit der höhenverstellbaren Halteverbindung, die einen diskreten, variierbaren Abstand a (Fig. 4) zwischen dem Tragrahmen 2 und dem Gerätesockel 3,3' ermöglicht, ist durch eine Anzahl von übereinanderliegenden Rastausnehmungen 35 realisiert. Die Rastausnehmungen 35 sind dazu als Längs- oder Klemmschlitze 48 mit zentralen Durchgangsbohrungen 49 ausgeführt, deren Innendurchmessers an den Außendurchmesser der Rastnocken 24 der am Gehäusesockel 3,3' vorgesehenen Haltezapfen 23 angepaßt ist.

Beim Zusammenfügen des Tragrahmens 2 und des Gerätesockels 3,3' wird je nach gewünschtem oder vorgegebenem Abstand a zwischen diesen beiden Teilen 2,3 bzw. 3' die entsprechende Rastausnehmung 35 mit den Rastnocken 24 verrastet. Fig. 4 zeigt eine obere, eine mittlere und eine untere Raststellung der im Ausführungsbeispiel insgesamt drei Raststellung. Anschließend wird diese Halteverbindung, vorzugsweise durch Verformen der Rastnocken 24, verpreßt. Dadurch ist die Halteverbindung praktisch unlösbar. Daher werden die gewünschten oder vorgegebenen Normabstände a zwischen dem Tragrahmen 2 und dem Gerätesockel 3,3' einmalig eingestellt. Auch kann der zweite Arbeitsschritt, mit dem die Halteverbindung unlösbar verpreßt wird, entfallen, so daß bei der Vorortmontage eine Anpassung an die örtlichen Gegebenheiten, beispielsweise an unterschiedliche Wandputzstärken oder verschiedene Unterputzdosentiefen, in einfacher Weise möglich ist.

### Bezugszeichenliste

- 1 .: Schalter/Installationsgerät
- 1': Steckdose
- 2: Tragrahmen
- 3,3': Gerätesockel
- 3a,3a': Sockeloberteil
- 3b,3b': Sockelunterteil
- 4,4': Sockelschacht
- 5: Abdeckarm
- 6,7: Kontaktelement
- 8: Klemmfeder
- 9: Einführöffnung
- 10: Kontaktteil
- 11 -14: Kontaktpunkt
- 15: Kontaktteilsenke
- 16: Kontaktteilfeder
- 17: Halte-/Drehlagernocke
- 18: Schwinger
- 19: Schwingerfuß
- 20: Joch
- 21: Tasterfeder
- 22: Sockellängsseite
- 23: Haltezapfen
- 24: Rastnocke
- 25: Klemmseite
- 26: Sockelausnehmung
- 27: Rastausnehmung
- 28: Rasthaken
- 29: Befestigungsfuß
- 30: Tragring
- 31: Einschnitt/Schlitz
- 32: Rahmen-/Tragringlippe
- 33: Halteschenkel
- 35: Rastausnehmung
- 36: Spreizkralle
- 37: Klemmschraube
- 38: Feder
- 39: Federschenkelende
- 40: Haltesteg
- 41: Fixierdorn
- 42: Zwischenrahmen
- 43: Schalter-/Tasterwippe
- 44: Kontaktbuchse
- 45: Schutzkontaktbügel
- 46: Niet
- 47: Steckdoseneinsatz
- 48: Längs-/Klemmschlitz
- 49: Durchgangsbohrung

## Patentansprüche

1. Installationsgerät zur Elektroinstallation, insbesondere Steckdose (1') oder Schalter (1) zur Unterputzmontage, mit einem einen Gerätesockel (3,3') haltenden Tragrahmen (2),
**dadurch gekennzeichnet,**
**dass** die Halteverbindung (23,24,29,35) zwischen dem Gerätesockel (3,3') und dem Tragrahmen (2) höhenverstellbar ausgebildet ist.

2. Installationsgerät nach Anspruch 1,
**dadurch gekennzeichnet,**
**dass** die Halteverbindung (23,24,29,35) nach Art eines Rastgesperres ausgebildet ist.

3. Installationsgerät nach Anspruch 1 oder 2,
**dadurch gekennzeichnet,**
**dass** am Tragrahmen (2) ein in Richtung auf den Gerätesockel (3,3') weisender Befestigungsfuß (29) mit mindestens einer Rastausnehmung (35) vorgesehen ist, die mit einem am Gerätesockel (3,3') angeordneten Rastnokken (24) in Eingriff bringbar ist.

4. Installationsgerät nach Anspruch 3,
**dadurch gekennzeichnet,**
**dass** der Befestigungsfuß (29) zwei einander gegenüberliegende, jeweils mindestens eine Rastausnehmung (35) aufweisende Halteschenkel (33) umfaßt, die in der Halteverbindung (23,24,29,35) einen am Gerätesockel (3,3') vorgesehenen Haltezapfen (23) zwischen sich einschließen, der an gegenüberliegenden Klemmseiten (25) jeweils einen Rastnocken (24) aufweist, der in die jeweilige Rastausnehmung (35) des diesem zugewandten Halteschenkels (33) eingreift.

5. Installationsgerät nach Anspruch 3 oder 4,
**dadurch gekennzeichnet,**
**dass** der oder jeder Befestigungsfuß (29) räumlich gestaltet, vorzugsweise bezogen auf den Gerätesockel (3,3') konvex ausgebogen, ist.

6. Installationsgerät nach einem der Ansprüche 2 bis 5,
**dadurch gekennzeichnet,**
**dass** das Rastgesperre mehrstufig mit einer Anzahl von übereinander angeordneten Rastausnehmungen (35) ausgebildet ist, von denen jede als Klemmschlitze (48) mit zentraler Durchgangsbohrung (49) ausgeführt ist.

## Claims

1. Installation device for electrical installation, in particular a socket (1') or switch (1) for flush mounting, with a supporting frame (2) holding a device base (3, 3'), **characterized in that** the holding connection (23, 24, 29, 35) between the device base (3, 3') and the supporting frame (2) is designed to be adjustable in height.

2. Installation device according to Claim 1, **characterized in that** the holding connection (23, 24, 29, 35) is designed in the manner of a catch.

3. Installation device according to Claim 1 or 2, **characterized in that** a fastening foot (29) with at least one catch cutout (35) is provided on the supporting frame (2), pointing in the direction of the device base (3, 3') and able to be brought into engagement with a catch lug (24) arranged on the device base (3, 3').

4. Installation device according to Claim 3, **characterized in that** the fastening foot (29) comprises two holding legs (33) which are opposite one another, have in each case at least one catch cutout (35) and enclose between them in the holding connection (23, 24, 29, 35) a holding pin (23) which is provided on the device base (3, 3') and has on the opposing clamping sides (25) in each case a catch lug (24), which engages in the respective catch cutout (35) of the holding leg (33) facing it.

5. Installation device according to Claim 3 or 4, **characterized in that** the or each fastening foot (29) is spatially shaped, preferably bent out convexly with respect to the device base (3, 3').

6. Installation device according to one of Claims 2 to 5, **characterized in that** the catch is of a multistage design, with a number of catch cutouts (35) arranged one above the other, each of which is formed as a clamping slot (48) with a central through-bore (49).

## Revendications

1. Dispositif d'installation pour une installation électrique, en particulier prise de courant (1') ou interrupteur (1) pour un montage encastré, équipé d'un cadre support (2) retenant un socle de dispositif (3,3'), **caractérisé en ce que** la liaison de retenue (23, 24, 29, 35) entre le socle de dispositif (3,3') et le cadre support (2) est réglable en hauteur.

2. Dispositif d'installation selon la revendication 1, **caractérisé en ce que** la liaison de retenue (23, 24, 29, 35) est réalisée à la manière d'un cliquet d'arrêt.

3. Dispositif d'installation selon la revendication 1 ou 2, **caractérisé en ce que** sur le cadre support (2) est prévu un pied de fixation (29) tourné en direction du socle de dispositif (3,3') avec au moins un évidement d'arrêt (35), qui peut être amené en prise avec un ergot d'arrêt (24) disposé sur le socle de dispositif (3,3').

4. Dispositif d'installation selon la revendication 3, **caractérisé en ce que** le pied de fixation (29) comprend deux branches de retenue (33) en vis-à-vis l'une de l'autre, présentant respectivement au moins un évidement d'arrêt (35), qui entourent entre elles dans la liaison de retenue (23, 24, 29, 35) un pivot de retenue (23) prévu sur le socle de dispositif (3,3'), qui présente sur des côtés de serrage (25) en vis-à-vis respectivement un ergot d'arrêt (24), qui pénètre dans l'évidement d'arrêt (35) respectif de la branche de retenue (33) tournée vers celui-ci.

5. Dispositif d'installation selon la revendication 3 ou 4, **caractérisé en ce que** le ou chaque pied de fixation (29) est façonné spatialement, de préférence courbé de façon convexe par rapport au socle de dispositif (3,3').

6. Dispositif d'installation selon une des revendications 2 à 5, **caractérisé en ce que** le cliquet d'arrêt est réalisé à plusieurs étages avec une pluralité d'évidements d'arrêt (35) superposés, dont chacun est réalisé sous la forme d'une fente de serrage (48) avec un alésage de passage central (49).
